# EUROPEAN PATENT SPECIFICATION

(11) **EP 0 361 534 B1**
(45) Date of publication and mention of the grant of the patent: **27.07.1994**
(21) Application number: 89119906.9
(22) Date of filing: 26.03.1984
(51) Int. Cl.: A01G 9/24

(54) **Means for controlling the condition of air in an enclosure**
Mittel zur Überwachung des Luftzustandes in einem Raum
Moyens pour contrôler l'etat de l'air dans une enceinte

(30) Priority: 25.03.1983 US 479009
(43) Date of publication of application: 04.04.1990
(62) Divisional of application: 84302023.1
(73) Proprietor: Geophysical Engineering Company, Seattle, Washington 98101-3099 (US)
(72) Inventor: Assaf, Gad, Rehovot (IL)
(74) Representative: Godwin, Edgar James

(56) References cited:
- GB-A- 2 042 713
- US-A- 3 247 679

## Description

This invention relates to an apparatus for controlling the condition of air in an enclosure, and more particularly for controlling the temperature and humidity of air in a enclosure such as a greenhouse.

Agricultural products, such as vegetables and flowers, are grown on a large scale in greenhouses throughout the world. During daylight hours, growing agricultural products introduce water vapor into the greenhouse and extract carbon dioxide from the air. The growth of such products is enhanced when excess carbon dioxide is introduced into the greenhouse during daylight hours. This can be accomplished, particular if heat is needed during the day, by burning LPG or natural gas and passing the products of combustion directly into the greenhouse. Water heated by burning the fuel can be stored during the day to provide a reservoir of heat that can be released during the night time to heat the greenhouse. The primary deficiency with this approach is the water vapor contained in the flue gases. When this water vapor is added to the water vapor products by the growing agricultural products, saturated, or nearly saturated conditions are created within the greenhouse. This condition of high humidity produces undesirable stress on all but tropical plans, and increases susceptibility of the plants to various diseases whose control requires periodic spraying or other treatment. As a consequence, considerable resistance has been encountered in applying this approach to greenhouse management.

The prior art, U.S. Patent No. 4,265,300, provides for burning LPG or LNG to produce air at about 1100°C which is mixed with air selectively drawn from both inside and outside a greenhouse, the ratio of inside to outside air being determined by a valve arrangement under the control of a thermostat. With this arrangement, warm air in the range 5° to 350°C can be supplied to the greenhouse when ambient conditions are as low as -45°C. Prior to its injection with the greenhouse, the air is conditioned by adding an appropriate amount of oxygen, by adding more heat or by extracting heat, and by dehumidification. Because the arrangement in this patent is not used in summertime, this patent does not address the basic problem of how to add excess carbon dioxide to a greenhouse during daylight hours in the summer without also adding excess water vapor which is deleterious to plant health. Furthermore, this patent does not address the problem of heating a greenhouse at night during the summer in arid regions of the world.

Zamir Levav and Arbel From, of the Israel Agricultural Research Organization, P.O. Box 6, Beit Dagan, Israel, have proposed an arrangement suitable for arid environments where, during the summer, a greenhouse must be heated at night. They proposed continuously exchanging water between a fresh water reservoir and a spray head in the greenhouse. During the day, the sprayed water would be cooler than the air in the greenhouse causing excess water vapor in the greenhouse, created by evapotranspiration of plants therein, to condense on the cooler water spray thus dehumidifying the air in the greenhouse and simultaneously cooling it. Warmed water from the spray is returned to the reservoir; and the water sprayed into the greenhouse at night is thus warmer than the air in the greenhouse. Consequently, heat absorbed by the water spray during the day for dehumidifying and cooling the greenhouse is returned to the greenhouse at night. This arrangement is very energy efficient, but is not satisfactory because, at night, the spray produces saturated conditions; and the 100% relative humidity has adverse effects on the plant.

The use of a brine spray for dehumidification is well known and is illustrated, for example, in U.S. Patent No. 2,405,169. Here, a refrigeration system is proposed employing a brine spray, which is first exposed to atmospheric air from within an enclosure for absorbing moisture therefrom, and is then heated, as by a boiler, to enable it to release this moisture when sprayed in a regeneration chamber. In the system of U.S. Patent No. 2,405,169, cooling is produced by passing air through a chamber wherein water is caused to evaporate due to the presence of concentrated brine adjacent thereto. This arrangement may be applicable to conditioning the air in a greenhouse, but it is very inefficient from an energy consumption standpoint.

Published European Patent Application 0038213 (Agri-Projects International Ltd) discloses a system for the control of temperature and humidity within a greenhouse. This system relies on a heat pump and various sensors located both inside and outside the greenhouse. Control logic uses information from the sensors to optimise the temperature and humidity of the air in the greenhouse, in accordance with ambient weather conditions. The expense and susceptibility to failure of the sensors and control logic are obvious disadvantages of this system.

US Patent 4,164,125 discloses apparatus for conditioning the air in a greenhouse using a heat exchanger supplied with concentrated brine. The apparatus includes a reservoir of brine with concentrated brine being supplied to a direct contact dehumidifier. This arrangement is used for both cooling and warming the greenhouse. However, the brine is refrigerated and heat extracted during cooling is not stored, with consequential loss of efficiency.

It is therefore an object of the present invention to provide a new and improved apparatus for controlling the condition of air in an enclosure such as a greenhouse, where the disadvantages of the prior art are substantially overcome or reduced.

The invention provides apparatus for controlling the condition of air in an enclosure, as defined in claim 1.

The present invention provides for conditioning air in a greenhouse subject to diurnal heat fluxes due, in part, to solar isolation and evapotranspiration of plants in the greenhouse during the day, and cooling at night. The invention involves condensing water vapor in the air in the greenhouse during the day such that the latent heat of condensation is converted into sensible heat, accumulating the sensible heat during the day, and returning sensible heat to the air in the greenhouse during the night without adding water vapor to the air. Specifically, concentrated brine is cycled between a reservoir where brine is stored and a direct-contact heat exchanger in the greenhouse where the brine is contacted with air. During the day, water vapor in the air condenses on the brine in contact with the air; and the latent heat of condensation is absorbed by the brine, whose temperature is thus raised, increasing the sensible heat of the brine. During the night, the air contacted by the brine is cooler than the brine and is thus heated.

The brine is sufficiently concentrated, and the reservoir is sufficiently large, to maintain the temperature of the brine entering the heat exchanger during the day at a level at which the vapor pressure at the air/brine interface is less than the vapor pressure of the air in the greenhouse. As a result, the brine will be hygroscopic and water vapor in the air will condense on the brine. Periodically, condensed water vapor is removed to reconstitute or regenerate the brine.

The diluted brine produced when water vapor in the greenhouse condenses on the concentrated brine is, in accordance with the invention, regenerated in a fuel-fired boiler whose products of combustion are optionally passed into the greenhouse. The products of combustion provide the desired level of carbon dioxide in the greenhouse during daylight for growing plants; and the excess water vapor in the products of combustion as well as a significant portion of the water vapor produced by the plants growing in the greenhouse are removed by the hygroscopic concentrated brine. Thus, the relative humidity of the air in the greenhouse can be controlled closely by controlling the concentration of the brine, the size of the direct-contact heat exchanger, and the mass flow of air passing over the heat exchanger.

Heating of the diluted brine in the boiler produces steam that is available to heat the interior of the greenhouse, if this is necessary; or the steam can be used for other purposes. Thus, the steam, as it is produced, can be piped directly to a closed heat exchanger within the greenhouse to heat the same and to provide fresh water if the greenhouse is in an arid climate. Alternatively, the steam can be piped to a heat storage tank to provide a reservoir of hot water that can be circulated into a heat exchanger in the greenhouse during the night, if heat is needed only at night. Preferably, a heat exchanger is provided by which heat from the concentrated brine produced by the boiler is transferred to the diluted brine before it enters the boiler.

An embodiment of the invention is shown in the accompanying drawing wherein:

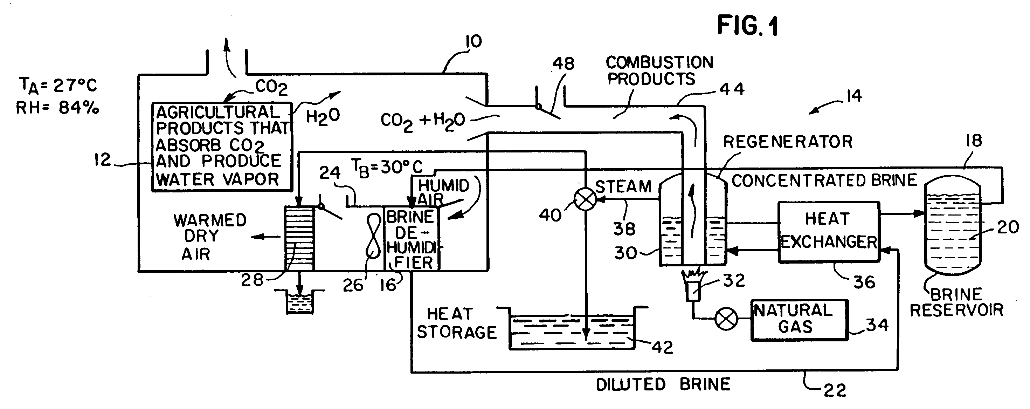

Fig. 1 is a schematic block diagram illustrated apparatus for controlling the condition of air in a greenhouse in accordance with the present invention.

Referring now to fig. 1, reference numeral 10 designates a greenhouse containing agricultural products 12 that absorb carbon dioxide during daylight hours and produce water vapor. At night, products 12 are quiescent. Associated with greenhouse 10 is apparatus 14 according to the present invention. Apparatus 14 comprises direct-contact brine dehumidifier 16 to which concentrated brine is supplied by a conduit 18 from brine reservoir 20, and from which diluted brine is obtained by conduit 22. Dehumidifier 16 comprises a felt pad, or mat of woven jute material, for example, that provides a large surface area over which the concentrated brine is fed to form a thin film of brine exposed to the air. Thus, dehumidifier 16 operates as a thin film, direct-contact heat exchanger as described below.

Duct 24 contained within greenhouse 10, and within which brine dehumidifier 16 is located, provides means for recirculating air in the greenhouse through the dehumidifier. Specifically, duct 24 contains fan 26 which draws humid air in the greenhouse through the dehumidifier and causes the air to pass through heat exchanger or radiator 28 before the air is reintroduced into the greenhouse.

Boiler 32, associated with brine reservoir 20, is heated by fuel burned in burner 32 which is connected to source 34 of fuel. Diluted brine from conduit 22 is pumped, or flows by gravity, through counter-flow heat exchange 36 and enters boiler 30 where it is regenerated by being heated. The boiler concentrates the diluted brine by evaporating water therefrom producing steam. Conduit 38 carries the steam to valve 40 which selectively directs the steam into radiator 28 (if the greenhouse must be heated), or into water tank 42 when the heat in the steam must be stored for use at a later time.

Boiler 30 thus concentrates the diluted brine; and the concentrated brine passes through heat exchange 36 into brine reservoir 20. The hot, concentrated brine produced by the boiler is cooled in heat exchanger 36 before being delivered to brine reservoir 20; and heat extracted from the concentrated brine is transferred to the incoming diluted brine.

Preferably, the fuel in burner 32 is liquified petroleum gas or natural gas in order to limit the products of combustion to carbon dioxide and water vapor. The products of combustion produced by the burned fuel associated with burner 30 are piped by a ductwork 44 into greenhouse 10 such that the products of combustion, namely carbon dioxide and water, are transferred into the greenhouse.

Agricultural products such as flowers or vegetables grow during daylight hours and actively absorb carbon dioxide from the air in the greenhouse. The active agricultural products also give off water vapor which adds to the water vapor introduced into the greenhouse by the products of combustion. In the absence of steps to the contrary, an almost saturated condition will result; and the purpose of brine dehumidifier 16 is to dehumidify the air within the greenhouse. Additionally, dehumidifier 16 serves to increase the temperature of the air in the greehouse in a manner explained below. Effectively, dehumidifier 16 is designed to maintain a humidity within the greenhouse at a level below 85%, and preferably between 80 and 85%. As explained below, the humidity of the air will be a function of the concentration of brine in the dehumidifier, the effective area of the brine dehumidifier, and the mass flow therethrough.

If it is desirable, steam from boiler 30 can be introduced into heat exchange 28 for purposes of further increasing the temperature in the air and in the greenhouse, or valve 40 can be selectively operated to direct the steam into heat storage 42 which acts as a reservoir to store heat. Storage 42 may be a tank of water which is heated by the condensation of steam produced by the boiler; or storage 42 may also contain gravel or crushed stone that is heated by the condensed steam. At night, when excess carbon dioxide is not needed in the greenhouse, the operation of boiler 30 can be suspended; and the heat stored in water tank 42 as a consequence of daytime operation of the boiler to produce carbon dioxide can be transferred to the air in the greenhouse. Alternatively, the steam produced by the boiler can be directed into a network of pipes buried in the ground beneath the greenhouse thus storing the heat in the ground. When the greenhouse is based on hydroponic operation, the steam produced by the boiler can be used to heat the liquids that are used in the hydroponic process.

Dehumidifier 16 may be conventional in sense that it is a direct contact heat exchanger in which concentrated brine is applied to a felt, jute or paper may as a thin film. Alternatively, the mat may be a capillary web through which the brine flows slowly. The vapor pressure at the air/liquid interface of concentrated brine is small as compared with the saturated vapor pressure of water at the same temperature. Thus, when concentrated brine is exposed to the air in the greenhouse, water vapor in the air condenses on the brine. The latent of condensation supplied to the brine during evaporation of water vapor heats the brine film; and the heated brine transfers its heat to the air flowing over the brine. This is an isentropic process in which the temperature of the brine remains substantially constant as the air is warmed and dried in passing through the dehumidifier.

If the temperature in the greenhouse during the day is 27°C, and if the brine temperature is about 30°C both entering and leaving the dehumidifier, a flow rate of about 1.5 m³ per hour per 1000 m² of a greenhouse would be required in order to maintain a rate of humidity of about 84% within the greenhouse. This arrangement provides about 200 kWh per 1000 m² of greenhouse area of heating during daylight hours assuming that the brine concentration changes from about 50% concentration to about 30% concentration within the dehumidifier. At night, the flow rate of the brine can be reduced to a level that just keeps the mat wet. This would provide additional dehumidification at night. To obtain a high concentration of brine, calcium chloride is the preferred salt; but other salts such as magnesium or mixtures of salts can be used. Dead Sea end brine can also be used.

The fuel required to regenerate the brine and provide carbon dioxide during the day would be about 10 kg/1000 m² of greenhouse area which will provide about 10 hours of operation per day. In some environments. the operation can be carried out only for 3 to 4 hours during the day because the temperature within the greenhouse will become excessive so far as the agricultural products are concerned. This requires either the shutdown of the system or the introduction of outside air into the greenhouse.

To provide suitable control over the operation of the system shown in Fig. 1, duct 44 may be provided with an adjustable butterfly valve 48 for controlling the rate in which the products of combustion are admitted into greenhouse 10 and a suitable valve (not shown) may be provided in duct 24 and in the greenhouse itself for purpose of controlling the flow air into the duct and into the greenhouse respectively.

The present invention is also useful in drying agricultural products, such as tobacco. In such case, the products of combustion are discharged directly to the atmosphere by bypassing the enclosure. The heat in the steam produced during regeneration of the brine can be saved and used for drying the agricultural products or used by a consumer. For example, if the drier requires a temperature of 73°C and a humidity of 77%, the dehumidifier can deliver air at 88°C with a humidity of 25%. To achieve this, the temperature of the concentrated brine entering the dehumidifier should be about 92°C. The vapor pressure of brine of density 1.5 at this temperature is only about 20% of the vapor pressure of water at this temperature. An airflow of only about 1 kg/sec of air will remove vapor at the rate of 7 kg/sec or 15 kW heat.

In the preceding discussion, mention has been made of the significant energy storage potential of concentrated brine. The following brief discussion is intended to provide an illustration of the quantities of energy which can be stored in a typcial application.

It is known that evaporation of Dead Sea brine over a summer can increase its density from approximately 1200 to approximately 1350 kg/m³ at a temperature of about 35°C. At a density of 1350 kg/m³, the brine has a vapor pressure which is 35% of that of water at the same temperature, while at a density of 1200 Kg/m³, the brine has a vapor pressure which is 75% of that of water at the same temperature. The dilution of brine from 1350 Kg/m³ involves the condensation of 650 Kg of water per m³ of brine. This condensation releases 440 KwH of heat per m³ in the form of latent heat of condensation which is converted to sensible heat of the brine. It will be appreciated, therefore, that a reservoir of 1000 m³ of Dead Sea brine has a condensation heat capacity for operation in a humidity range of 35% - 75% of 440,000 Kwh.

## Claims

1. Apparatus for controlling the condition of air in an enclosure (10), comprising
a source (20) of concentrated brine;
a direct-contact heat exchanger (16) for dehumidifying the air in the enclosure, when brine from the source (20) is passed to the direct-contact heat exchanger (16), for causing the condensation of water vapor in the contacted air on the contacted brine to warm and dry the air and to dilute the brine without substantially changing its temperature as latent heat released by the condensation of water vapor in the contacted air on the contacted brine is transferred to the contacted air; and
a boiler (30) for regenerating dilute brine, produced by the direct-contact heat exchanger (16), by heating the dilute brine, thereby producing steam and more concentrated brine that is returned to the source (20),
characterised by means (38,40) for passing the steam so produced to a closed-contact heat exchanger (28) for heating the enclosure (10).

2. Apparatus according to claim 1, wherein the said means (38,40) are operable to pass the steam so produced to a heat storage (42) for storing heat when it is not needed in the enclosure (10).

3. Apparatus according to claim 1 or 2, wherein brine is exchangeable between the source (20) and the boiler (30), there being an indirect-contact heat exchanger (36) between the source (20) and the boiler (30) for exchanging heat between the brine leaving the boiler (30) and the brine entering the boiler (30).

4. Apparatus according to any of claims 1 to 3, including means (44) for passing products of combustion produced by the boiler (30) to the enclosure (10).

## Patentansprüche

1. Vorrichtung zum Steuern des Zustandes der Luft in einer Umhüllung (10), die aufweist:
eine Quelle (20) mit konzentriertem Salzwasser;
einen Wärmeaustauscher (16) mit direktem Kontakt, zum Entfeuchten der Luft in der Umhüllung, wenn Salzwasser von der Quelle (20) nach dem Wärmeaustauscher (16) mit direktem Kontakt geleitet wird, um die Kondensation von Wasserdampf in der kontaktierten Luft auf dem kontaktierten Salzwasser zu bewirken, mit dem Ziel, die Luft zu erwärmen und zu trocknen, und das Salzwasser zu verdünnen, ohne seine Temperatur wesentlich zu ändern, da die gebundene Wärme, die durch die Kondensation des Wasserdampfes in der kontaktierten Luft auf dem kontaktierten Salzwasser freigesetzt wird, auf die kontaktierte Luft übertragen wird; und
einen Boiler (30) zum Regenerieren des verdünnten Salzwassers, das von dem Wärmeaustauscher (16) mit direktem Kontakt erzeugt wird, durch Erhitzen des verdünnten Salzwassers, wodurch Dampf und stärker konzentriertes Salzwasser erzeugt werden, wobei dieses Salzwasser nach der Quelle (20) zurückgeleitet wird,
gekennzeichnet durch Mittel (38, 40), um den so erzeugten Dampf nach einem Wärmeaustauscher (28) mit geschlossenem Kontakt zu leiten, mit dem Ziel, die Umhüllung (10) zu erwärmen.

2. Vorrichtung gemäß Anspruch 1, bei der die Mittel (38, 40) so betätigbar sind, daß der so erzeugte Dampf nach einem Wärmespeicher (42) geleitet wird, um die Wärme zu speichern, wenn sie in der Umhüllung (10) nicht benötigt wird.

3. Vorrichtung gemäß Anspruch 1 oder 2, bei der das Salzwasser zwischen der Quelle (20) und dem Boiler (30) austauschbar ist, wobei ein Wärmeaustauscher (36) mit indirektem Kontakt zwischen der Quelle (20) und dem Boiler (30) vorgesehen ist, um Wärme auszutauschen zwischen dem Salzwasser, das den Boiler (30) verläßt, und dem Salzwasser, das in den Boiler (30) hineinfließt.

4. Vorrichtung gemäß irgendeinem der Ansprüche 1 bis 3, die Mittel (44) aufweist, um von dem Boiler (30) erzeugte Verbrennungsprodukte nach der Umhüllung (10) zu leiten.

## Revendications

1. Dispositif pour le contrôle de l'état de l'air dans une enceinte (10), comprenant
une source (20) d'eau salée concentrée;
un échangeur de chaleur à contact direct (16) pour déshumidifier l'air dans l'enceinte, lors du transfert de l'eau salée de la source (20) vers l'échangeur de chaleur à contact direct (16), pour que la condensation de la vapeur d'eau dans l'air contacté sur l'eau salée contactée chauffe et sèche l'air et dilue l'eau salée sans changer pratiquement sa température, lors du transfert de la chaleur latente dégagée par la condensation de la vapeur d'eau dans l'air contacté sur l'eau salée contactée vers l'air contacté; et
une chaudière (30) pour régénérer l'eau salée diluée, produite par l'échangeur de chaleur à contact direct (16), par chauffage de l'eau salée diluée, produisant ainsi de la vapeur et de l'eau salée plus concentrée qui est ramenée vers la source (20),
caractérisé par des moyens (38, 40) servant à amener la vapeur ainsi produite vers un échangeur de chaleur à contact fermé (28) en vue du chauffage de l'enceinte (10).

2. Dispositif selon la revendication 1, dans lequel lesdits moyens (38, 40) peuvent être entraînés à transférer la vapeur ainsi produite vers un accumulateur de chaleur (42) en vue de l 'accumulation de la chaleur lorsque celle-ci n'est pas requise dans l'enceinte (10).

3. Dispositif selon les revendications 1 ou 2, dans lequel l'eau salée est échangeable entre la source (20) et la chaudière (30), un échangeur de chaleur à contact indirect (36) étant agencé entre la source (20) et la chaudière (30) pour assurer l'échange de chaleur entre l'eau salée quittant la chaudière (30) et l'eau salée entrant dans la chaudière (30).

4. Dispositif selon l'une quelconque des revendications 1 à 3, englobant un moyen (44) pour transférer les produits de combustion produits par la chaudière (30) vers l'enceinte (10).
